# EUROPEAN PATENT SPECIFICATION

(11) **EP 4 280 297 B1**
(45) Date of publication and mention of the grant of the patent: **12.03.2025**
(21) Application number: 22773963.8
(22) Date of filing: 21.02.2022
(51) Int. Cl.: H01M 4/13, H01M 4/139, H01M 10/0525, H01M 4/1393, H01M 4/587, H01M 4/133, H01M 4/36, H01M 4/485, H01M 4/505, H01M 4/525, H01M 4/62, H01M 4/58

(54) **ANODE PLATE OF LITHIUM ION BATTERY AND APPLICATION THEREOF**
ANODENPLATTE EINER LITHIUM-IONEN-BATTERIE UND ANWENDUNG DAVON
PLAQUE ANODIQUE D'UNE BATTERIE LITHIUM-ION ET APPLICATION ASSOCIÉE

(30) Priority: 26.03.2021 CN 202110326552
(43) Date of publication of application: 22.11.2023
(73) Proprietor: Contemporary Amperex Technology (Hong Kong) Limited, Central, Central And Western District (HK)
(72) Inventor: LIU, Zhi, Ningde, Fujian 352100 (CN); FAN, Hailin, Ningde, Fujian 352100 (CN); LIU, Sitong, Ningde, Fujian 352100 (CN); SHI, Dongyang, Ningde, Fujian 352100 (CN)
(74) Representative: Ziebig Hengelhaupt Intellectual Property Attorneys Patentanwaltskanzlei PartGmbB
(86) International application number: PCT/CN2022/077075
(87) International publication number: WO 2022/199301

(56) References cited:
- CN-A- 105 470 496
- CN-A- 105 470 496
- CN-A- 111 785 923
- CN-A- 112 151 777
- US-A1- 2012 009 472
- US-A1- 2018 248 178
- US-A1- 2019 198 865

## Description

### Technical Field

The present disclosure relates to the field of batteries, more particularly to an anode plate for a lithium-ion battery, and further to a lithium-ion battery containing the anode plate, a battery module, a battery pack, and a power consumption device, and a method for inhibiting lithium precipitation on a surface of an anode plate in a lithium-ion battery.

### Background Art

With the development of related fields in recent years, the rechargeable battery (also referred to as secondary battery) is increasingly used in high-tech, high-strength, and high-demand fields such as goods for daily use, new energy vehicles, large-scale energy storage, aviation and aerospace, ships, heavy machinery, and even as main power and energy supply equipment in these fields. Among various different secondary batteries developed, the lithium-ion secondary battery has attracted much attention because of excellent performance. However, the lithium-ion secondary battery itself has some significant drawbacks that have not been solved so far, for example, in the use process of daily charge and discharge of the lithium-ion battery, the process of intercalation of lithium ions in the electrolyte into the anode is not uniformly performed, whereby metallic lithium dendrites may be generated on the surface of the anode after long-term cycle, and in severe cases, these dendrites may penetrate the separator, and further there is a risk of safety accidents such as battery short-circuit, swelling, burning, and even explosion. **In** order to avoid the above problems, some attempts have been made in the prior art, for example, a ceramic insulating layer is provided on the surface of the anode, but this practice cannot really solve the problem of lithium precipitation on a surface of a graphite layer of the anode and incapability of lithium intercalation at the bottom of the graphite layer, and only reduces the harm of dendrites to a certain extent; however, the problem of lithium dendrite precipitation on the surface of the anode cannot be really and effectively avoided, and other problems such as increased battery polarization, reduced energy density, short cycle life, and unstable charging and discharging voltage plateau are also caused. People urgently desire to solve the above problems.

CN105470496 discloses a lithium ion battery having a negative electrode comprising a copper foil, graphite negative electrode material applied on the copper foil and a lithium titanate coating. The thickness of the lithium titanate coating is 10-20 µm.

US2018248178 discloses a composite anode for a lithium ion battery, comprising carbon material core particles and a coating layer of lithium titanium oxide (LTO) particles over the carbon material core particles, wherein the carbon material core particles comprise graphite.

CN112151777 discloses in the example 1 a method for preparing a negative electrode by applying a negative electrode composite material on the current collector and coating a lithium phosphate or lithium silicate to prepare the negative electrode material. Artificial graphite can be selected as the negative electrode active material. US2012009472 discloses a negative electrode comprising a graphite slurry coated on a piece of copper foil and lithium titanate coated on the first negative-electrode active material layer.

### Summary

In order to solve the above problems in the prior art, the applicant made intensive studies and unexpectedly found that by using an anode plate having a specifically designed lithium-precipitation inhibiting layer, lithium ions can be preferentially intercalated into an underlying active material rather than being preferentially accumulated in the lithium-precipitation inhibiting layer, so as to effectively avoid the phenomenon of lithium precipitation on the anode surface in a quite simple and economical way, and meanwhile, the anode/cathode capacity ratio (CB value, Cell Balance value) of the lithium-ion battery can be reduced, the initial coulombic efficiency and energy density of the lithium-ion battery are greatly improved, and an ideal cycle life and charging and discharging voltage plateau are realized.

In a first aspect of the present disclosure, an anode plate for a lithium-ion battery is provided, wherein the anode plate includes:
i) a current collector;
ii) an anode active material layer located on at least one surface of the current collector; and
iii) a lithium-precipitation inhibiting layer located on the anode active material layer, wherein the lithium-precipitation inhibiting layer contains at least one of the following lithium-precipitation inhibiting materials: LiNiₓCo_{y}Mn_{z}Fe_{w}O₂, LiMPO₄, LiMO₂, and Li₄Ti₅O₁₂, where 0≤x≤1, 0≤y≤1, 0≤z≤1, 0≤w≤1, and x+y+z+w=1, and M is selected from Fe, Co, Ni, Mn or a combination thereof.

In an embodiment of the first aspect of the present disclosure, the lithium-precipitation inhibiting layer contains at least one of the following lithium-precipitation inhibiting materials: LiNi_{0.85}Co_{0.075}Mn_{0.075}O₂, LiNi_{0.8}Co_{0.1}Mn_{0.1}O₂, LiNi_{0.7}Co_{0.15}Mn_{0.15}O₂, LiNi_{0.6}Co_{0.2}Mn_{0.2}O₂, LiNi_{0.5}Co_{0.2}Mn_{0.3}O₂, LiNi_{1/3}Co_{1/3}Mn_{1/3}O₂, LiCoO₂, LiNiO₂, LiMnO₂, LiFeO₂, LiFePO₄, LiCoPO₄, LiNiPO₄, LiMnPO₄, and Li₄Ti₅O₁₂.

In another embodiment of the first aspect of the present disclosure, the LiNiₓCo_{y}Mn_{z}Fe_{w}O₂ is a layered-structure composite metal oxide, the LiMPO₄ is an olivine-structure compound, and the Li₄Ti₅O₁₂ is a spinel-structure compound.

In another embodiment of the first aspect of the present disclosure, the lithium-precipitation inhibiting layer contains a first binder, and the first binder is one or more selected from the group consisting of: polyvinylidene fluoride, polytetrafluoroethylene, polychlorotrifluoroethylene.

In another embodiment of the first aspect of the present disclosure, the lithium-precipitation inhibiting layer contains no conductive material.

In another embodiment of the first aspect of the present disclosure, the lithium-precipitation inhibiting layer contains no carbon-based conductive material. In another embodiment of the first aspect of the present disclosure, the lithium-precipitation inhibiting layer does not contain any one of the following carbon-based conductive materials: graphite, mesocarbon microbead, soft carbon, hard carbon, carbon nanotube, carbon fiber, graphene, carbon black, ketjen black, Super P, acetylene black, furnace black, and vapor grown carbon fiber (VGCF). All of the above carbon-based conductive materials are not contained in the lithium-precipitation inhibiting layer.

In another embodiment of the first aspect of the present disclosure, the lithium-precipitation inhibiting layer has a thickness of 1.8-20 microns; the anode active material layer has a thickness of 30-340 microns, and the thickness of the lithium-precipitation inhibiting layer is 0.018-0.2 times that of the anode active material layer.

In another embodiment of the first aspect of the present disclosure, the lithium-precipitation inhibiting layer has a thickness of 2.3-15 microns; the anode active material layer has a thickness of 55-260 microns, and the thickness of the lithium-precipitation inhibiting layer is 0.023-0.11 times that of the anode active material layer.

In another embodiment of the first aspect of the present disclosure, the anode active material layer contains: an active material, which is one or more selected from the group consisting of: graphite, hard carbon, a silicon-based material, and a tin-based material; a second binder, which is one or more selected from the group consisting of: styrene-butadiene rubber, water-soluble unsaturated resin SR-1B, sodium alginate, polyurethane, polyacrylic acid, polymethacrylic acid, sodium polyacrylate, sodium polycarboxymethylcellulose, polyacrylamide, polyvinyl alcohol, and carboxymethyl chitosan; and a conductive agent: carbon nanotube, carbon fiber, graphene, carbon black, ketjen black, or Super P.

In another embodiment of the first aspect of the present disclosure, the potential difference between the lithium-precipitation inhibiting layer and the anode active material layer is 1-4 volts.

**In** another embodiment of the first aspect of the present disclosure, the current collector is a metal foil, a metal alloy foil, a polymer sheet with a metal coating or a polymer sheet with a metal alloy coating, wherein the metal in the metal foil and the metal coating is selected from the group consisting of copper, silver, iron, titanium, and nickel; the metal alloy in the metal alloy foil and the metal alloy coating is selected from the group consisting of copper alloy, nickel alloy, titanium alloy, silver alloy, and iron alloy; and the polymer sheet is selected from the group consisting of polypropylene, polyethylene terephthalate, polybutylene terephthalate, polystyrene, polyethylene, and mixtures and copolymers thereof.

In a second aspect of the present disclosure, a lithium-ion battery is provided, which comprises a cathode plate, an electrolyte, and an anode plate of the present disclosure.

In an embodiment of the second aspect of the present disclosure, a capacity ratio of the anode plate and the cathode plate is 1.07 to 1.01, for example, 1.07 to 1.03.

In a third aspect of the present disclosure, a method of inhibiting lithium precipitation on a surface of an anode plate in a lithium-ion battery is provided, wherein the method comprises:
providing an anode plate, wherein the anode plate comprises a current collector and an anode active material layer located on at least one surface of the current collector; and
providing a lithium-precipitation inhibiting layer on a surface of the anode active material layer, wherein the lithium-precipitation inhibiting layer contains at least one of the following materials: LiNiₓCo_{y}Mn_{z}Fe_{w}O₂, LiMPO₄, Li₂M₂O₄ and Li₄Ti₅O₁₂, where 0≤x≤1, 0≤y≤1, 0≤z≤1, 0≤w≤1, and x+y+z+w=1, and M is selected from Fe, Co, Ni, Mn or a combination thereof.

In a fourth aspect of the present disclosure, a battery module is provided, comprising the lithium-ion battery according to the present disclosure.

In a fifth aspect of the present disclosure, a battery pack is provided, comprising the battery module according to the present disclosure.

In a sixth aspect of the present disclosure, a power consumption device is provided, which comprises at least one of the lithium-ion battery, the battery module, and the battery pack according to the present disclosure.

### Beneficial effects

In the present disclosure, by specifically designing the lithium-precipitation inhibiting layer in the anode plate, the lithium ions can be preferentially intercalated into the underlying active material rather than being preferentially accumulated in the surface-layer active material, then the phenomenon of lithium precipitation on the anode surface is avoided effectively in a quite simple and economical way, and meanwhile, the anode/cathode capacity ratio (CB value) of the battery can be reduced, the initial coulombic efficiency and energy density of the lithium-ion battery are greatly improved, an ideal cycle life and charging and discharging voltage plateau are realized, and at least one of the following effects further can be optionally realized: excellent first-effect isoelectric performance, excellent dynamic performance, long service lifetime, convenient manufacture, improved safety performance, reduced gas generation, etc.

### Brief Description of Drawings

FIG. 1 is a sectional view of an anode plate according to an embodiment of the present disclosure.
FIG. 2a is a picture of a surface of an anode plate according to a comparative example of the present disclosure, wherein the anode plate has no lithium-precipitation inhibiting layer.
FIG. 2b is a picture of a surface of the anode plate according to an example of the present disclosure, wherein the anode plate has a lithium-precipitation inhibiting layer containing lithium iron phosphate.
FIG. 3 shows charging curves of a comparative example (curve a) and an example (curve b) according to the present disclosure.
FIG. 4 shows potential boost achieved by providing a lithium-precipitation inhibiting layer in an example of the present disclosure.
FIG. 5 is a schematic view of an embodiment of a lithium-ion battery in the present disclosure.
FIG. 6 is an exploded view of the lithium-ion battery shown in FIG. 5.
FIG. 7 is a schematic view of an embodiment of a battery module of the present disclosure.
FIG. 8 is a schematic view of an embodiment of a battery pack of the present disclosure.
FIG. 9 is an exploded view of the battery pack shown in FIG. 8.
FIG. 10 is a schematic view of an embodiment in which the lithium-ion battery in the present disclosure is used as a power consumption device of a power supply.

**In** the following part of Detailed Description of Embodiments, design details of a negative electrode active material and a manufacturing method thereof, an electrode manufactured by using the negative electrode active material, and a lithium ion battery containing this electrode, a battery module, a battery pack, and a power consumption device designed in the present disclosure are described.

### Detailed Description of Embodiments

The "range" disclosed in the present disclosure is defined in the form of a lower limit and an upper limit, a given range is defined by selecting a lower limit and an upper limit, and the selected lower limit and upper limit define boundaries of a particular range. A range defined in this manner may include end values or not, and may be arbitrarily combined, i.e., any lower limit may be combined with any upper limit to form a range. For example, if the ranges of 60-120 and 80-110 are listed for a particular parameter, it is contemplated that the ranges of 60-110 and 80-120 are also expected. Besides, if the minimum range values listed are 1 and 2, and the maximum range values listed are 3, 4, and 5, the following ranges can be all expected: 1-3, 1-4, 1-5, 2-3, 2-4, and 2-5. In the present disclosure, unless otherwise stated, the numerical range "a-b" represents an abbreviation of combinations of any real numbers between a and b, where a and b are both real numbers. For example, the numerical range "0-5" indicates that all real numbers in "0-5" have been all listed herein, and "0-5" is just an abbreviation of combination of these numerical values. In addition, when a parameter is expressed as an integer greater than or equal to 2, it is equivalent to disclose that the parameter is, for example, an integer 2, 3, 4, 5, 6, 7, 8, 9, 10, 11, 12 and the like.

In the present disclosure, if without special illustration, all the embodiments and preferred embodiments mentioned in the present disclosure can be combined with each other to form a new technical solution.

In the present disclosure, if without special illustration, all the technical features and preferred features mentioned in the present disclosure can be combined with each other to form a new technical solution.

In the present disclosure, if without special illustration, the terms "include (comprise)" and "contain" mentioned in the present disclosure is open-ended, and also may be close-ended. For example, the terms "include (comprise)" and "contain" may mean that other components that are not listed also may be included or contained, or only the listed components may be included or contained.

In the description herein, it should be noted that, unless otherwise stated, "no less than" and "no more than" means including the number itself, and "more" in "one or more" means two or more.

In the description herein, unless otherwise stated, the term "or" is inclusive. For example, the phrase "A or B" means "A, B, or both A and B". More specifically, any of the following conditions satisfies the condition "A or B": A is true (or present) and B is false (or absent); A is false (or absent) and B is true (or present); or both A and B are true (or present).

In the present disclosure, the terms "lithium-ion battery" and "lithium-ion secondary battery" are used interchangeably to refer to a lithium-ion battery that can be repeatedly charged and discharged. Throughout the present disclosure, the terms "negative electrode" and "anode" are used interchangeably to refer to the same electrode in a battery; and the terms "positive electrode" and "cathode" are used interchangeably to refer to the same electrode in a battery.

In various embodiments of the present disclosure, a binder is used in both an anode active material layer and a lithium-precipitation inhibiting layer, and the binders used in each of the two layers may be the same as each other or different from each other, preferably different from each other. In order to distinguish the binders used in the anode active material layer and the lithium-precipitation inhibiting layer, the binder used in the lithium-precipitation inhibiting layer is referred to as "binder of the lithium-precipitation inhibiting layer" or "first binder" and the binder in the anode active material layer is referred to as "binder of the anode active material layer" or "second binder" in some paragraphs of the present disclosure. It should be specifically noted herein that the foregoing prefixes "first" and "second" are used for distinguishing purposes only, but do not have any limiting effect on the importance, order of use, spatial locations, or use amounts of the binders.

According to an embodiment of the present disclosure, a novel anode plate for a lithium-ion battery is developed in the present disclosure, wherein the anode plate includes:
i) a current collector;
ii) an anode active material layer located on at least one surface of the current collector; and
iii) a lithium-precipitation inhibiting layer located on the anode active material layer, wherein the lithium-precipitation inhibiting layer contains at least one of the following lithium-precipitation inhibiting materials: LiNiₓCo_{y}Mn_{z}Fe_{w}O₂, LiMPO₄, LiMO₂, and Li₄Ti₅O₁₂, where 0≤x≤1, 0≤y≤1, 0≤z≤1, 0≤w≤1, and x+y+z+w=1, and M is selected from Fe, Co, Ni, Mn or a combination thereof and a first binder, wherein the lithium-precipitation inhibiting layer contains no conductive material.

According to an embodiment of the present disclosure, a numerical value of w may be in a numerical range obtained by taking any two of the following numerical values as an upper limit and a lower limit, respectively: 0, 0.01, 0.015, 0.02, 0.025, 0.03, 0.035, 0.04, 0.05, 0.06, 0.07, 0.075, 0.08, 0.085, 0.09, 0.1, 0.15, 0.2, 0.25, 0.3, 1/3, 0.35, 0.4, 0.45, 0.5, 0.55, 0.6, 0.65, 2/3, 0.7, 0.75, 0.8, 0.85, 0.9, 0.95, 0.99, 1; and according to a preferred embodiment, the numerical value of w may be 0 or 1. A numerical value of x may be in a numerical range obtained by taking any two of the following numerical values as an upper limit and a lower limit, respectively: 0.01, 0.015, 0.02, 0.025, 0.03, 0.035, 0.04, 0.05, 0.06, 0.07, 0.075, 0.08, 0.085, 0.09, 0.1, 0.15, 0.2, 0.25, 0.3, 1/3, 0.35, 0.4, 0.45, 0.5, 0.55, 0.6, 0.65, 2/3, 0.7, 0.75, 0.8, 0.85, 0.9, 0.95, 0.99. According to another embodiment of the present disclosure, a numerical value of y may be in a numerical range obtained by taking any two of the following numerical values as an upper limit and a lower limit, respectively: 0.01, 0.015, 0.02, 0.025, 0.03, 0.035, 0.04, 0.05, 0.06, 0.07, 0.075, 0.08, 0.085, 0.09, 0.1, 0.15, 0.2, 0.25, 0.3, 1/3, 0.35, 0.4, 0.45, 0.5, 0.55, 0.6, 0.65, 2/3, 0.7, 0.75, 0.8, 0.85, 0.9, 0.95, 0.99. According to another embodiment of the present disclosure, a numerical value of z may be in a numerical range obtained by taking any two of the following numerical values as an upper limit and a lower limit, respectively: 0.01, 0.015, 0.02, 0.025, 0.03, 0.035, 0.04, 0.05, 0.06, 0.07, 0.075, 0.08, 0.085, 0.09, 0.1, 0.15, 0.2, 0.25, 0.3, 1/3, 0.35, 0.4, 0.45, 0.5, 0.55, 0.6, 0.65, 2/3, 0.7, 0.75, 0.8, 0.85, 0.9, 0.95, 0.99. In all the above embodiments, the precondition x+y+z+w=1 is satisfied. It should be particularly emphasized that, although the above numerical values are listed in parallel, it does not mean that the inventor admits that equivalent or similar performance can be obtained within the numerical ranges of the metal element content formed by any two of the foregoing numerical values as end points, and the most preferred compositions of lithium-precipitation inhibiting materials in the present disclosure are selected merely based on the specific discussion and specific experimental data below.

According to an embodiment of the present disclosure, the lithium-precipitation inhibiting layer contains at least one of the following materials: LiNi_{0.85}Co_{0.075}Mn_{0.075}O₂, LiNi_{0.8}Co_{0.1}Mn_{0.1}O₂, LiNi_{0.7}Co_{0.15}Mn_{0.15}O₂, LiNi_{0.6}Co_{0.2}Mn_{0.2}O₂, LiNi_{0.5}Co_{0.2}Mn_{0.3}O₂, LiNi_{1/3}Co_{1/3}Mn_{1/3}O₂, LiCoO₂, LiNiO₂, LiMnO₂, LiFeO₂, LiFePO₄, LiCoPO₄, LiNiPO₄, LiMnPO₄, and Li₄Ti₅O₁₂. According to another embodiment of the present disclosure, the LiNiₓCo_{y}Mn_{z}Fe_{w}O₂ is a layered-structure composite metal oxide (for cases where w=0 and x, y, and z are all non-zero) or a spinel-structure composite metal oxide (for cases where w=1 and x, y, and z are all zero), the LiMPO₄ is an olivine-structure composite metal oxide, and the Li₄Ti₅O₁₂ is a spinel-structure composite metal oxide.

Without wishing to be bound by any particular theory, the anode plate in the prior art typically only includes a current collector and an anode active material layer located on a surface of the current collector, and does not include a lithium-precipitation inhibiting layer provided on the anode active material layer, and the anode active material layer typically includes a carbon active material (e.g., graphite, mesocarbon microbead, soft carbon, hard carbon, etc.), a conductive agent (acetylene black, furnace black, VGCF, carbon nanotube, etc.), a binder, and optionally other additives, etc. When such anode plate only including the current collector and the anode active material layer in the prior art is assembled into the lithium-ion battery, in the charging process, the lithium ions in the electrolyte will be intercalated into the anode active material layer, but the intercalation of the lithium ions on the surface of and inside the anode active material layer is not uniform, and the enrichment of the lithium ions on the surface of the anode active material layer easily causes precipitation of lithium dendrites on the surface of the anode plate, and further brings the risk of short-circuit. The practice of further providing a ceramic insulating material layer on the anode active material layer cannot really and effectively eliminate the above problem of non-uniform lithium ion intercalation on the surface of and inside the anode active material layer, and even will further cause the problems of increased battery polarization, reduced energy density, short cycle life, unstable charging and discharging voltage plateau, etc. of the lithium-ion battery. None of the existing technologies describes the lithium-precipitation inhibiting layer containing the specially designed material in the present disclosure. The present disclosure overcomes the problems of the prior art based on the design of the lithium-precipitation inhibiting layer.

The applicant also particularly wishes to emphasize that, to date, there may be some studies that may involve the use of the materials for the lithium-precipitation inhibiting layer described in the present disclosure as a cathode active material in the cathode/positive electrode of the lithium-ion battery, but prior to the present disclosure, the use of the materials for the anode/negative electrode of the lithium-ion battery and forming the lithium-precipitation inhibiting layer on the anode active material layer have never been reported. **In** fact, due to differences in electrochemical reactions occurring at the cathode and anode, a general consensus of those ordinarily skilled in the art is that the cathode active material should not be used for the anode.

According to an embodiment of the present disclosure, the lithium-precipitation inhibiting layer contains a first binder (i.e. a binder of the lithium-precipitation inhibiting layer), for example, the first binder is one or more selected from the following: polyvinylidene fluoride (also known as PVDF), polytetrafluoroethylene, polychlorotrifluoroethylene.

According to an embodiment of the present disclosure, the lithium-precipitation inhibiting layer does not contain a conductive material. According to another embodiment of the present disclosure, the lithium-precipitation inhibiting layer does not contain an anode active material (an anode active material used in an anode active material layer). According to another embodiment of the present disclosure, the lithium-precipitation inhibiting layer neither contains a conductive material nor contains an anode active material in the anode active material layer. In the above embodiments, the lithium-precipitation inhibiting layer does not contain any conventional carbon conductive material, such as acetylene black, furnace black, VGCF, carbon nanotube, carbon fiber, graphene, carbon black, ketjen black, and Super P, in addition, the lithium-precipitation inhibiting layer does not contain any other conductive material commonly used for electrodes other than carbon, either. In the above embodiments, the lithium-precipitation inhibiting layer does not contain any conventional anode active material such as graphite, hard carbon, silicon-based materials, and tin-based materials. According to another embodiment of the present disclosure, the lithium-precipitation inhibiting layer merely consists of the lithium-precipitation inhibiting material described in the above and the first binder, and does not contain other components. By selecting the above composition, the anode plate of the present disclosure can achieve further optimized performance. Without wishing to be bound by any particular theory, the inventors quite surprisingly found that it is presumed that the lithium-precipitation inhibiting layer contains any one or both of any conventional conductive agent and anode active material, the effect of the lithium-precipitation inhibiting layer may be greatly compromised, and the effects of inhibiting lithium precipitation and improving the performance of the lithium-ion battery described herein may not be ideally achieved.

According to an embodiment of the present disclosure, based on the dry weight of the lithium-precipitation inhibiting layer, the content of the lithium-precipitation inhibiting material in the lithium-precipitation inhibiting layer is 50 to 99.9 wt%, for example, 55 to 99 wt%, or 60 to 98.5 wt%, or 65 to 98 wt%, or 70 to 97.5 wt%, or 80 to 97 wt%, or 90 to 97 wt%, or 95 to 97 wt%. According to another embodiment of the present disclosure, based on the dry weight of the lithium-precipitation inhibiting layer, the content of the first binder in the lithium-precipitation inhibiting layer is 0.01 to 50 wt%, for example, 0.02 to 45 wt%, or 0.05 to 40 wt%, or 0.1 to 35 wt%, or 0.5 to 30 wt%, or 0.75 to 20 wt%, or 1 to 15 wt%, or 1.25 to 12.5 wt%, or 1.5 to 10 wt%, or 2 to 7 wt%, or 3 to 6 wt%. According to some embodiments of the present disclosure, when the content of the lithium-precipitation inhibiting material is within the above ranges, precipitation of lithium on the surface of the anode can be effectively inhibited, and meanwhile there is a sufficient binding force between the lithium-precipitation inhibiting layer and the underlying anode active material layer. When the content of the lithium-precipitation inhibiting material is lower than the lower limits of the above ranges, the effect of significantly inhibiting crystallization of lithium on the surface cannot be achieved, and when the lithium-precipitation inhibiting material is higher than the upper limits of the above ranges, the binding force of the lithium-precipitation inhibiting layer may be insufficient, and there is a relatively high risk of delamination.

According to an embodiment of the present disclosure, the lithium-precipitation inhibiting layer has a thickness of 1.8-20 microns, preferably 2.3-15 microns. For example, the thickness of the lithium-precipitation inhibiting layer may be within a numerical range obtained by combining any two end points below: 1.8 micros, 1.9 micros, 2 micros, 2.1 micros, 2.2 micros, 2.3 micros, 2.5 micros, 2.6 micros, 2.8 micros, 3 micros, 3.2 micros, 3.5 micros, 3.8 micros, 4 micros, 4.2 micros, 4.3 micros, 4.5 micros, 4.8 micros, 5 micros, 5.5 micros, 6 micros, 6.5 micros, 7 micros, 7.5 micros, 8 micros, 8.5 micros, 9 micros, 9.5 micros, 10 micros, 10.5 micros, 11 micros, 11.5 micros, 12 micros, 12.5 micros, 13 micros, 13.5 micros, 14 micros, 14.5 micros, 15 micros, 15.5 micros, 16 micros, 16.5 micros, 17 micros, 17.5 micros, 18 micros, 18.5 micros, 19 micros, 19.5 micros, and 20 micros.

According to some embodiments of the present disclosure, when the thickness of the lithium-precipitation inhibiting layer is within the above ranges, precipitation of lithium on the anode surface can be effectively inhibited, and meanwhile sufficient wetting of the electrode plate by the electrolytic solution can be ensured. When the thickness of the lithium-precipitation inhibiting layer is less than the lower limit of the above numerical ranges, the effect of inhibiting lithium precipitation on the anode surface cannot be effectively achieved; and when the thickness of the lithium-precipitation inhibiting layer is greater than the upper limit of the above numerical ranges, the electrolytic solution cannot sufficiently wet the electrode plate.

According to another embodiment of the present disclosure, the anode active material layer has a thickness of 30-340 microns, preferably 55-260 microns. For example, the thickness of the anode active material layer may be within a numerical range obtained by combining any two end points below: 30 micros, 35 micros, 40 micros, 45 micros, 50 micros, 55 micros, 60 micros, 65 micros, 70 micros, 75 micros, 80 micros, 85 micros, 90 micros, 95 micros, 100 micros, 105 micros, 110 micros, 115 micros, 120 micros, 125 micros, 130 micros, 135 micros, 140 micros, 145 micros, 150 micros, 155 micros, 160 micros, 165 micros, 170 micros, 175 micros, 180 micros, 185 micros, 190 micros, 195 micros, 200 micros, 205 micros, 210 micros, 215 micros, 220 micros, 225 micros, 230 micros, 235 micros, 240 micros, 245 micros, 250 micros, 255 micros, 260 micros, 270 micros, 275 micros, 280 micros, 285 micros, 290 micros, 295 micros, 300 micros, 305 micros, 310 micros, 315 micros, 320 micros, 325 micros, 330 micros, 335 micros, 340 micros.

According to some embodiments of the present disclosure, when the thickness of the anode active material layer is within the above ranges, it can be ensured that the battery has a sufficiently high energy density, and meanwhile, it can be ensured that the electrolytic solution sufficiently wets the electrode plate. When the thickness of the anode active material layer is less than the lower limit of the above numerical ranges, the energy density of the battery will be too low; and when the thickness of the anode active material layer is greater than the upper limit of the above numerical ranges, the electrolytic solution cannot sufficiently wet the electrode plate, resulting in that the energy density cannot be sufficiently improved, either.

According to some embodiments of the present disclosure, the lithium-precipitation inhibiting layer has a thickness of 2.3-15 microns, and the anode active material layer has a thickness of 55-260 microns. In cases where the thicknesses of the lithium-precipitation inhibiting layer and the anode active material layer meet the above limitation, a ratio of the thickness of the lithium-precipitation inhibiting layer to the thickness of the anode active material layer may be 0.018-0.2, preferably 0.023-0.15, for example, the ratio may be within a numerical range obtained by combining any two of the following numerical values: 0.018, 0.023, 0.033, 0.06, 0.10, 0.11, 0.15, and 0.2. In these embodiments, when the thicknesses of the lithium-precipitation inhibiting layer and the anode active material layer are both within the above ranges, and the ratio of the thickness of the lithium-precipitation inhibiting layer to the thickness of the anode active material layer is also within the above ranges, the lithium-precipitation inhibiting effect can be optimized, thus ensuring that the battery achieves excellent initial coulombic efficiency, cycle performance, and higher energy density.

According to an embodiment of the present disclosure, the anode active material layer contains: an active material, which is one or more selected from the group consisting of: graphite (for example, natural graphite or artificial graphite), hard carbon, a silicon-based material (for example, elemental silicon, silicon monoxide, a silicon carbon composite), and a tin-based material (for example, elemental tin, a tin oxide compound, and a tin alloy); a second binder, which is one or more selected from the group consisting of: styrene-butadiene rubber (SBR), water-soluble unsaturated resin SR-1B, sodium alginate (SA), polyurethane, polyacrylic acid (PAA), polymethacrylic acid (PMAA), sodium polyacrylate (PAAS), sodium polycarboxymethylcellulose, polyacrylamide (PAM), polyvinyl alcohol (PVA), and carboxymethyl chitosan (CMCS); and a conductive agent, which is one or more selected from the group consisting of: carbon nanotube, carbon fiber, graphene, carbon black, ketjen black, and Super P.

According to an embodiment of the present disclosure, the potential difference between the lithium-precipitation inhibiting layer and the anode active material layer is 1-4 volts, for example, 2-2.3 volts. For example, the potential of the lithium-precipitation inhibiting layer is higher than the potential of the anode active material layer by 1-4 volts, preferably by 2-2.3 volts. According to some embodiments of the present disclosure, when the potential difference between the lithium-precipitation inhibiting layer and the anode active material layer is within the above ranges, it can be ensured that the battery has a sufficiently high energy density, and meanwhile, the normal operation of the battery can be ensured. When the potential difference between the lithium-precipitation inhibiting layer and the anode active material layer is less than the lower limit of the above numerical ranges, the effect of inhibiting the lithium precipitation on the surface of the anode plate cannot be effectively achieved; and when the potential difference between the lithium-precipitation inhibiting layer and the anode active material layer is greater than the upper limit of the above numerical ranges, the overall normal operation of the anode plate will be adversely affected.

According to an embodiment of the present disclosure, the current collector is a metal foil, a metal alloy foil, a polymer sheet with a metal coating or a polymer sheet with a metal alloy coating, wherein the metal in the metal foil and the metal coating is selected from the group consisting of copper, silver, iron, titanium, and nickel; the metal alloy in the metal alloy foil and the metal alloy coating is selected from the group consisting of copper alloy, nickel alloy, titanium alloy, silver alloy, and iron alloy; and the polymer sheet is selected from the group consisting of polypropylene, polyethylene terephthalate, polybutylene terephthalate, polystyrene, polyethylene, and mixtures and copolymers thereof.

According to an embodiment of the present disclosure, the negative electrode can be prepared in a following way: an anode active material, a conductive agent, a binder (i.e., the binder for the anode active layer or the second binder) and other optional adjuvants and dispersing agent (such as N-methylpyrrolidone (NMP) or deionized water) are mixed to form a slurry, the slurry is coated on a current collector, followed by drying to form an anode active material layer, and then a slurry of lithium-precipitation inhibiting layer containing a lithium-precipitation inhibiting material, a binder (i.e., a binder for the lithium-precipitation inhibiting layer or the first binder), and a dispersing agent can be coated on the anode active material layer, followed by drying to form the lithium-precipitation inhibiting layer. Examples of other adjuvants optionally included in the anode active material layer may be a thickening agent (such as, carboxymethylcellulose sodium CMC-Na), a PTC thermistor material, etc.

In addition, in the lithium-ion secondary battery of the present disclosure, the anode/negative electrode plate does not exclude other additional functional layers. In some embodiments, for example, the anode/negative electrode plate further may include an electrically conductive primer layer (e.g., consisting of a conductive agent and a binder) provided between a negative electrode current collector and the anode active material layer.

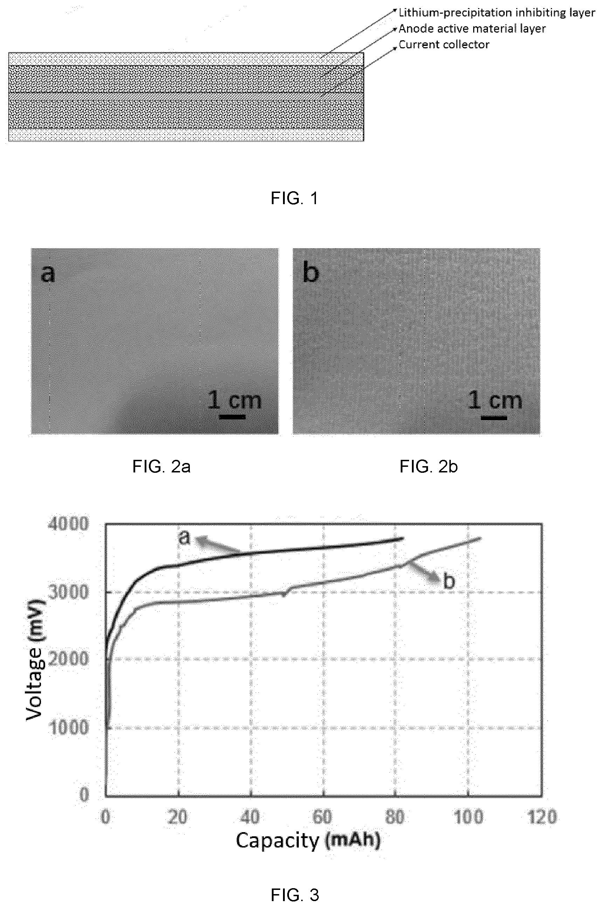

FIG. 1 shows an anode/negative electrode plate formed according to an embodiment of the present disclosure, wherein the anode active material layer and the lithium-precipitation inhibiting layer are formed on two surfaces of a central current collector, respectively. According to another embodiment of the present disclosure, the anode active material layer and the lithium-precipitation inhibiting layer may be formed only on one surface of the current collector. According to an embodiment of the present disclosure, the lithium-precipitation inhibiting layer completely covers an entire outer surface of the anode active material layer (the surface of the anode active material layer opposite to the current collector).

In some embodiments of the present disclosure, a lithium-ion secondary battery is provided, which includes a positive electrode plate, a negative electrode plate, a separator, an electrolyte, etc. In a charging and discharging process of the battery, lithium ions as active ions are intercalated and extracted back and forth between the positive electrode plate and the negative electrode plate. The electrolyte plays a role of conducting ions between the positive electrode plate and the negative electrode plate. The negative electrode plate (anode plate) used therein is the negative electrode/anode plate of the present disclosure.

In the lithium-ion secondary battery, the positive electrode plate includes a positive electrode current collector and a positive electrode film layer provided on at least one surface of the positive electrode current collector and including a positive electrode active material. For example, the positive electrode current collector has two surfaces opposite to each other in its own thickness direction, and the positive electrode film layer is provided on any one or both of the two opposite surfaces of the positive electrode current collector.

In the lithium-ion secondary battery, the positive electrode current collector may be a metal foil or a composite current collector, for example, the metal foil may be aluminum foil, and the composite current collector may include a polymer material substrate layer and a metal layer formed on at least one surface of the polymer material substrate layer. The composite current collector can be formed by forming a metal material (aluminum, aluminum alloy, nickel, nickel alloy, titanium, titanium alloy, silver, and silver alloy, etc.) on a polymer material substrate (e.g., a substrate of polypropylene PP, polyethylene terephthalate PET, polybutylene terephthalate PBT, polystyrene PS, polyethylene PE and copolymers thereof, etc.).

In the lithium-ion secondary battery, the positive electrode active material may use positive electrode active materials for the lithium-ion secondary battery well known in the art. These positive electrode active materials may be used alone or a combination of two or more may be used.

In some embodiments, the positive electrode film layer further optionally includes a binder. Non-limiting examples of the binder that can be used for the positive electrode film layer may include one or more of the following: polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some embodiments, the positive electrode film layer further optionally contains a conductive agent. Examples of the conductive agent for the positive electrode film layer may include one or more of superconducting carbon, acetylene black, carbon black, ketjen black, carbon dots, carbon nanotubes, graphene, and carbon nanofibers.

In some embodiments, the positive electrode plate may be prepared in a following manner: dispersing the foregoing components for preparing the positive electrode plate, for example, the positive electrode active material, the conductive agent, the binder, and any other components in a solvent (for example, N-methylpyrrolidone), to form a uniform positive electrode slurry; and coating the positive electrode slurry on the positive electrode current collector, followed by procedures such as drying and cold pressing, to obtain the positive electrode plate.

The electrolyte plays a role of conducting ions between the positive electrode/cathode plate and the negative electrode/anode plate. The electrolyte can be at least one selected from a solid electrolyte and a liquid electrolyte (i.e., an electrolyte solution).

According to some embodiments of the present disclosure, as the anode plate in the present disclosure has a specially designed structure of a current collector, an anode active material layer, and a lithium-precipitation inhibiting layer, and the materials in the lithium-precipitation inhibiting layer are specially designed, a capacity ratio of the anode to the cathode in the lithium-ion secondary battery of the present disclosure will not be significantly improved, for example, the capacity ratio (CB value) of the anode and the cathode is 1.07 to 1.01, or 1.07 to 1.03, or within a numerical range obtained by combining any two of the following numerical values: 1.07, 1.06, 1.05, 1.04, 1.03, 1.02, 1.01. The above-mentioned CB value, representing the ratio of negative electrode/anode capacity to positive electrode/cathode capacity in the battery, can be calculated according to the following formula: CB value = (anode area density X anode active material ratio X anode active material discharging specific capacity)/(cathode area density X cathode active material ratio X cathode active material discharging specific capacity)

Thus, in the present disclosure, the specific CB value of each battery is accurately determined based on the specifically selected type and amount of the active material applied to the positive electrode and the negative electrode (e.g., based on the electrode plate thickness, the proportion of active material contained, etc.).

According to some embodiments of the present disclosure, when the capacity ratio of the anode to the cathode is within the above ranges, an appropriate energy density of the battery can be achieved, and lithium precipitation on the surface of the anode plate can be effectively inhibited. When the capacity ratio of the anode to the cathode in the lithium-ion secondary battery of the present disclosure is higher than the upper limit of the above numerical ranges, the energy density of the battery will be significantly reduced; and when the capacity ratio of the anode to the cathode in the lithium-ion secondary battery of the present disclosure is lower than the lower limit of the above numerical ranges, lithium precipitation will easily occur on the surface of the anode plate.

In some embodiments, the electrolyte is an electrolytic solution. The electrolytic solution includes an electrolyte salt and a solvent. In some embodiments, the electrolyte salt may be one or more selected from the group consisting of lithium hexafluorophosphate (LiPF₆), lithium tetrafluoroborate (LiBF₄), lithium perchlorate (LiClO₄), lithium hexafluoroarsenate (LiAsF₆), lithium bisfluorosulfonimide (LiFSI), lithium bistrifluoromethanesulfonimide (LiTFSI), lithium trifluoromethanesulfonate (LiTFS), lithium difluorooxalato borate (LiDFOB), lithium bisoxalate borate (LiBOB), lithium difluorophosphate (LiPO₂F₂), lithium difluorodioxalate phosphate (LiDFOP), and lithium tetrafluorooxalate phosphate (LiTFOP).

In some embodiments, the solvent may be one or more selected from the group consisting of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethylsulfone (MSM), methylsulfone acetate (EMS), and diethyl sulfone (ESE).

In some embodiments, based on the total weight of the electrolytic solution, the content of the solvent is 60-99 wt%, for example, 65-95 wt%, or 70-90 wt%, or 75-89 wt%, or 80-85 wt%. In some embodiments, based on the total weight of the electrolytic solution, the content of the electrolyte is 1-40 wt%, for example, 5-35 wt%, or 10-30 wt%, or 11-25 wt%, or 15-20 wt%.

In some embodiments, the electrolytic solution further may optionally contain an additive. For example, the additive may include one or more of the following: a negative electrode film-forming additive and a positive electrode film-forming additive, and further may include an additive capable of improving certain performances of the battery, for example, an additive improving overcharge performance of the battery, an additive improving high temperature of the battery, and an additive improving low temperature of the battery.

In some embodiments, the lithium-ion secondary battery further includes a separator separating the anode plate from the cathode plate of the lithium-ion secondary battery, and providing selective permeation or barrier to species of different types, sizes, and charges within the system, e.g. the separator may insulate the electrons, physically isolate the positive and negative electrode active materials of the lithium-ion secondary battery, so that short-circuit is prevented from occurring inside and an electric field in a certain direction is formed, and meanwhile the ions in the battery can move between the positive and negative electrodes passing through the separator.

In some embodiments, the material for preparing the separator may include one or more of glass fiber, non-woven fabric, polyethylene, polypropylene, and polyvinylidene fluoride. The separator may be a single-layer thin film, and also may be a multi-layer composite thin film. When the separator is a multi-layer composite thin film, materials of various layers may be the same or different.

In some embodiments, the above anode plate, cathode plate, and separator may be manufactured into an electrode assembly through a winding process or a lamination process.

In some embodiments, the lithium-ion battery may include an outer package, and the outer package can be used to encapsulate the above electrode assembly and electrolyte.

In some embodiments, the outer package of the lithium-ion battery may be a hard shell, for example, a hard plastic shell, an aluminum shell, a steel shell.

In some embodiments, the outer package of the lithium-ion battery may be a soft package, for example, a pouch type soft package. The material of the soft package may be plastic, for example, one or more of polypropylene (PP), polybutylene terephthalate (PBT), and polybutylene succinate (PBS).

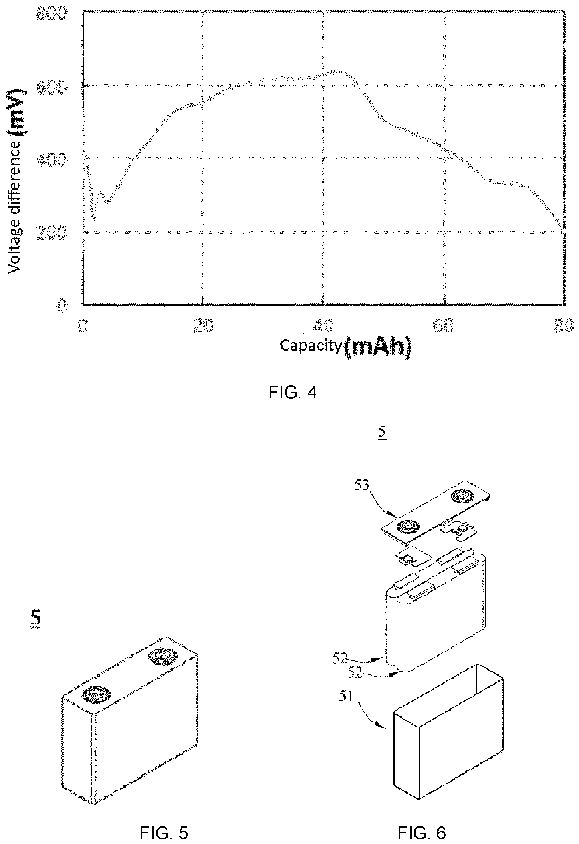

The shape of the lithium-ion battery may be cylindrical, square or any other arbitrary shapes. FIG. 5 shows a lithium-ion battery 5 in a square structure as an example. FIG. 6 shows an exploded view of the lithium-ion battery 5 in FIG. 5. The outer package may include a housing 51 and a cover plate 53, wherein the housing 51 may include a bottom plate and a side plate connected to the bottom plate, and the bottom plate and the side plate are enclosed to form an accommodating cavity. The housing 51 has an opening in communication with the accommodating cavity, and the cover plate 53 can be provided to cover the opening so as to close the accommodating cavity. The positive electrode plate, the negative electrode plate, and the separator can form an electrode assembly 52 through a winding process or a lamination process. The electrode assembly is encapsulated in the accommodating cavity. The electrolytic solution is soaked in the electrode assembly 52. The number of electrode assemblies 52 contained in the lithium-ion battery 5 may be one or more.

In some embodiments, several lithium-ion batteries may be assembled together to form a battery module, wherein the battery module contains two or more lithium-ion batteries, and the specific number depends on the application of the battery module and parameters of a single battery module.

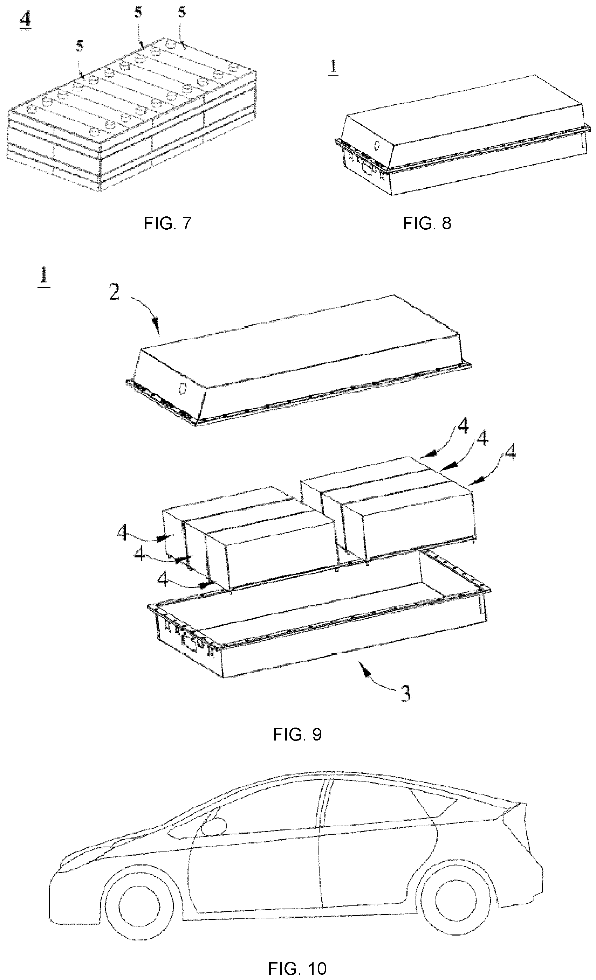

FIG. 7 shows a battery module 4 as an example. Referring to FIG. 7, in the battery module 4, a plurality of lithium-ion batteries 5 may be sequentially arranged in a longitudinal direction of the battery module 4. Without doubt, the secondary batteries 5 also may be arranged in any other manners. Further, the plurality of lithium-ion batteries 5 may be fixed by fasteners.

Optionally, the battery module 4 further may include an enclosure having an accommodating space, and the plurality of lithium-ion batteries 5 are accommodated in the accommodating space.

In some embodiments, two or more above battery modules may be assembled into a battery pack, and the number of battery modules contained in the battery pack depends on the application of the battery pack and parameters of a single battery module. The battery pack may include a battery cubicle and a plurality of battery modules provided in the battery cubicle, wherein the battery cubicle includes an upper cubicle body and a lower cubicle body, the upper cubicle body can cover the lower cubicle body and be well matched with the lower cubicle body, forming an enclosed space for accommodating the battery modules. Two or more battery modules may be arranged in the battery cubicle in a desired manner.

FIG. 8 and FIG. 9 show a battery pack 1 as an example. Referring to FIG. 8 and FIG. 9, a battery cubicle and a plurality of battery modules 4 provided in the battery cubicle may be included in the battery pack 1. The battery cubicle includes an upper cubicle body 2 and a lower cubicle body 3, and the upper cubicle body 2 is configured to cover the lower cubicle body 3, to form an enclosed space for accommodating the battery modules 4. A plurality of battery modules 4 may be arranged in the battery cubicle in an arbitrary manner.

The present disclosure further provides a power consumption device, wherein the power consumption device includes at least one of the lithium-ion battery, the battery module or the battery pack in the above. The lithium-ion battery, the battery module, or the battery pack can be used as a power supply of the power consumption device, and also can be used as an energy storage unit of the power consumption device. The power consumption device includes a mobile digital power consumption device (for example, a mobile phone, a notebook computer), an electric vehicle (for example, a battery electric vehicle, a hybrid electric vehicle, a plug-in hybrid electric vehicle, an electric bicycle, an electric scooter, an electric golf cart, an electric truck), an electric train, a ship and a satellite, an energy storage system, etc., but is not limited thereto.

FIG. 10 shows the power consumption device as an example. This power consumption device is a battery electric vehicle, a hybrid electric vehicle, a plug-in hybrid electric vehicle, etc. In order to meet the requirements of the power consumption device for high power and high energy density, the battery pack or the battery module can be used.

The power consumption device as another example may be a mobile phone, a tablet computer, a notebook computer, etc. This power consumption device is generally required to be light and thin, and may use the lithium-ion battery as a power supply.

Hereinafter, the influence of the anode plate manufactured according to the embodiments of the present disclosure on the performance of the lithium-ion secondary battery is characterized based on specific examples, but it should be specially pointed out that the scope of protection of the present disclosure is defined by the claims, and is not merely limited to the above specific embodiments.

### Examples

Unless otherwise stated, all the raw materials used in the present disclosure are analytically pure, and all water is deionized water.

In the examples of the present disclosure, a lithium-precipitation inhibiting layer of an anode plate is synthesized by using the following lithium-precipitation inhibiting materials.

| Lithium-precipitation inhibiting material | Supplier |
|---|---|
| LiFePO₄ | Xiamen Tungsten Co., Ltd. |
| LiNi_{0.5}Co_{0.2}Mn_{0.3}O₂ | Hunan Brunp Recycling Technology Co., Ltd. |
| LiNi_{1/3}Co_{1/3}Mn_{1/3}O₂ | Hunan Brunp Recycling Technology Co., Ltd. |
| LiNi_{0.8}Co_{0.1}Mn_{0.1}O₂ | Hunan Brunp Recycling Technology Co., Ltd. |
| LiCoO₂ | Xiamen Tungsten Co., Ltd. |
| Li₂Mn₂O₄ (i.e. LiMnO₂) | Xiamen Tungsten Co., Ltd. |
| Li₄Ti₅O₁₂ | Shenzhen BTR New Material Group Co., Ltd. |

### Example 1

In this example, an anode plate containing a lithium-precipitation inhibiting layer of LiFePO₄ was synthesized, and a lithium-ion battery including this anode plate was characterized.

Manufacturing a negative electrode/anode: graphite, a binder styrene-butadiene rubber (SBR), a thickening agent carboxymethylcellulose sodium (CMC-Na), and a conductive agent carbon black were fully stirred and mixed in deionized water at a weight ratio of 96.2:1.8:1.2:0.8, to form them into a uniform slurry with a solid content of 30 wt%; the slurry was coated on a surface of a negative electrode current collector copper foil, the coated negative electrode current collector copper foil was transferred into an oven to be dried at a temperature of 150 °C for 60 minutes, to form a dry coating (i.e., anode active material layer) with a thickness of 150 microns. It was then removed from the oven. LiFePO₄ and polyvinylidene fluoride as a binder were fully stirred and mixed in deionized water at a weight ratio of 97:3, to form them into a uniform slurry with a solid content of 30 wt%. The slurry was applied to the anode active material layer previously formed. The coated anode active material layer was transferred into the oven to be dried at a temperature of 150 °C for 60 minutes, to form a dry coating (i.e., a lithium-precipitation inhibiting layer) with a thickness of 15 microns. In the present embodiment, a ratio of the thickness of the lithium-precipitation inhibiting layer obtained to the thickness of the anode active material layer is equal to 0.1. Cold pressing was performed using roll press equipment at 60-ton pressure, to obtain an anode plate. FIG. 2b shows an optical photograph of a surface of this anode plate.

Manufacturing a positive electrode/cathode: a lithium nickel cobalt manganese ternary active substance LiNi_{0.5}Co_{0.2}Mn_{0.3}O₂ (NCM523), a conductive agent carbon black, and a binder PVDF were fully stirred and mixed well in an appropriate amount of N-methylpyrrolidone (NMP) according to a weight ratio of 94:3:3, to form them into a uniform positive electrode slurry with a solid content of 30 wt%; a wet coating having a thickness of 250 µm was formed on a side surface of an Al foil 12 µm thick by using a transfer coating method, and then the Al foil was transferred into the oven to be dried at a temperature of 150 °C for 60 minutes, and cold-pressed by using the roll press equipment at 60-ton pressure to obtain a positive electrode plate, wherein the dry coating has a thickness of 130 µm. In the present example, a CB value of the anode plate to the cathode plate is 1.07.

A PE film 16 µm thick was selected as a separator.

Ethylene carbonate (EC), ethyl methyl carbonate (EMC), and diethyl carbonate (DEC) were mixed according to a volume ratio of 1:1:1, and then lithium salt LiPF₆ fully dried was uniformly dissolved in the above mixed solvent to obtain an electrolytic solution, wherein the concentration of LiPF₆ is 1 mol/L.

The positive electrode plate, the separator, and the negative electrode plate in the above were stacked and wound in turn to form a wound laminated structure having a dimension of 5.1 cm×4.4 cm×0.5 cm. The wound laminated structure was disposed in an aluminum shell, into which 150 grams of the electrolytic solution was injected, and the aluminum shell was encapsulated. After standing, formation, and aging, the lithium-ion secondary battery was obtained. The prepared battery core was first allowed to stand for 6 hours, then installed in a charge-discharge tester purchased from Wuhan Land, and tested at 45 °C under the following condition: first, the battery core was charged to 3.4 V at 0.1 C, allowed to stand for 15 minutes, and then charged to 3.8 V at 0.33 C. Results obtained are as shown by curve b in FIG. 3.

### Comparative Example 1

In Comparative Example 1, the steps of Example 1 were substantially repeated to manufacture an anode plate and a lithium-ion battery. The difference merely lies in that, after an anode active material layer is formed, no lithium-precipitation inhibiting layer is further provided on the anode active material layer. FIG. 2a shows an optical photograph of a surface of the anode plate. In the present example, a CB value of the anode plate to the cathode plate is 1.07. A charging curve thereof was tested at room temperature in the same manner as in Example 1, and result is shown by curve a in FIG. 3.

It can be seen by observing FIG. 2a and FIG. 2b that the outermost lithium-precipitation inhibiting layer of the anode plate prepared by the above steps in Example 1 has a quite uniform surface, and the outermost anode active material layer of the anode plate prepared by the above steps in Comparative Example 1 also has a quite uniform surface.

A voltage difference curve shown in FIG. 4 can be obtained by subtracting voltage values of the two curves a and b in FIG. 3. This voltage difference curve reflects the voltage difference exhibited by the anode plates of Example 1 and Comparative Example 1. Specifically, it can be observed from the curve in FIG. 4 that after the surface of the anode active layer (containing graphite as the anode active material) is coated with the lithium-precipitation inhibiting layer containing LiFePO₄, the surface anode potential at different SOCs is raised by 200-620 mV.

The potential increase shown herein reflects overall potential change of the anode in Example 1 in which the lithium-precipitation inhibiting layer and the anode active material layer are jointly as the anode relative to Comparative Example 1 in which the anode does not contain the lithium-precipitation inhibiting layer. The potential difference between the lithium-precipitation inhibiting layer and the anode active material layer in Example 1 is within the range of 1-4 volts as defined in the present disclosure, about 3.2 V.

### Example 2

A battery was manufactured in the same manner as in Example 1 by using the anode plate and the cathode plate prepared in Example 1 (CB value is 1.07). The difference merely lies in that a copper wire with a diameter of 200 microns is additionally provided on the surface of the anode, and the copper wire leads out an electrode and is welded with a nickel sheet, as a third electrode (a reference electrode), thus a three-electrode battery is obtained. Lithium precipitation windows at different rates were verified at room temperature in the following way.
(1) A surface of the copper wire was plated with lithium, a positive electrode of the charge-discharge tester was connected to a cathode of the battery, a negative electrode of the charge-discharge tester was connected to the copper wire, and the battery was charged under a current of 20 microamperes for two hours, so that lithium ions in the cathode were deposited on the copper wire. Subsequently, the positive electrode of the charge-discharge tester was connected to the anode of the battery, the negative electrode was connected to the copper wire, and the battery was charged under a current of 20 microamperes for two hours, so that lithium ions in the anode were deposited on the copper wire.
(2) Charging and discharging at different rates: different rates (0.33 C, 1 C, 3 C, and 5 C) were selected for charging at room temperature, and meanwhile, the potential of the third electrode (copper wire) and the potential of the anode were monitored, so that the potential difference (potential) between the two was 0 volt cut-off. SOC (state of charge, SOC=charging capacity/total capacity of battery core) at different rates was monitored, to characterize a lithium-precipitation window on the surface of the anode plate in the battery. Results measured are summarized in Table 1 below.

### Comparative Example 2

In Comparative Example 2, the steps of Example 2 were substantially repeated to manufacture a three-electrode battery. The difference merely lies in that the anode plate in Comparative Example 1 is used, and the lithium-precipitation inhibiting layer is not further provided on the anode active material layer. The SOC (state of charge) at different rates was monitored at room temperature in the same manner as that in Example 2, so as to characterize a lithium-precipitation window on the surface of the anode plate in the battery. Results thereof are summarized in Table 1. Table 1 shows the SOC of the batteries corresponding to different rates when the anode potential is zero.

**Table 1: Lithium-precipitation Window Characterization Results of Example 2 and Comparative Example 2**

| | Lithium- precipitation inhibiting layer | CB value | State of charge SOC at different rates | | | |
|---|---|---|---|---|---|---|
| | | | 0.33 C | 1 C | 3 C | 5 C |
| Example 2 | Containing LiFePO₄ | 1.07 | 100%SOC | 100%SOC | 100%SOC | 100%SOC |
| Comparative Example 2 | None | 1.07 | 100%SOC | 97%SOC | 86%SOC | 68%SOC |

It can be seen from the results in Table 1 that the battery prepared in Example 2 does not show decrease in SOC at any rate of the test at room temperature, indicating that no lithium precipitation occurs at these rates. However, the battery prepared in Comparative Example 2 has SOC decrease at a rate of 1 C or more, indicating that lithium precipitation occurs, and as the rate increases, the extent of the SOC decrease increases accordingly, indicating that more serious lithium precipitation phenomenon occurs.

### Example 3

The steps of Example 2 were repeated to construct a three-electrode battery and SOC was measured at different rates (0.33 C, 1 C, 3 C, 5 C) at room temperature (each experiment is performed on three battery cores under the same conditions, and the test result is an average of data of the three battery cores), so as to investigate the lithium-precipitation window thereof. This Example 3 also differs from Example 1 in that, by slightly adjusting the use amount of cathode active material, the CB value is changed to 1.01, 1.03, and 1.05, respectively. SOC at different rates was verified at room temperature in the same manner as in Example 2, to characterize the lithium-precipitation window on the surface of the anode plate in the battery. Results thereof are summarized in Table 2.

### Comparative Example 3

The steps of Comparative Example 2 were repeated to construct a three-electrode battery and SOC was measured at different rates (0.33 C, 1 C, 3 C, 5 C) at room temperature according to the test technology in Comparative Example 2 (each experiment is performed on three battery cores under the same condition, and the test result is an average of data of the three battery cores), so as to investigate the lithium-precipitation window thereof. This Comparative Example 3 also differs from Comparative Example 2 in that, by slightly adjusting the use amount of cathode active material, the CB value in the experiment is changed to 1.01, 1.03, and 1.05, respectively. SOC at different rates was verified at room temperature, to characterize the lithium-precipitation window on the surface of the anode plate in the battery. Results thereof are summarized in Table 2. The experimental results shown in Table 2 are the SOC of the lithium-ion battery with different CB values when the anode potential is zero.

**Table 2: Lithium-precipitation Window Characterization Results of Example 3 and Comparative Example 3**

| | Lithium-precipitation inhibiting layer | CB value | State of charge SOC at different rates | | | |
|---|---|---|---|---|---|---|
| | | | 0.33C | 1C | 3C | 5C |
| Example 3 | Containing LiFePO₄ | 1.01 | 98%SOC | 95%SOC | 88%SOC | 78%SOC |
| | Containing LiFePO₄ | 1.03 | 100%SOC | 98%SOC | 92%SOC | 87%SOC |
| | Containing LiFePO₄ | 1.05 | 100%SOC | 100%SOC | 100%SOC | 99%SOC |
| Comparative Example 3 | None | 1.01 | 94%SOC | 88%SOC | 68%SOC | 46%SOC |
| | None | 1.03 | 96%SOC | 90%SOC | 74%SOC | 52%SOC |
| | None | 1.05 | 98%SOC | 94%SOC | 80%SOC | 57%SOC |

From the experimental results shown in Table 2, it can be seen that, for various different CB values, the extent of SOC change of the lithium-ion battery of Example 3 is significantly smaller than that of Comparative Example 3, which indicates that Example 3 effectively inhibits lithium precipitation at any CB value.

### Example 4

In this example, the steps of Example 1 were repeated to synthesize a lithium-ion battery (CB value is 1.07). A charge-discharge cycle was performed at 1 C rate at room temperature, the charge-discharge voltage range used was 2.8 V~4.35 V, and a charge current is 1 C. A specific flow is as follows: (1) charging to 4.35 V under 1 C current, and measuring a charging capacity in this process as initial charging capacity; (2) standing for 10 minutes; (3) discharging to 2.8 V under 1 C current and measuring the discharging capacity in this process as initial discharging capacity, and calculating initial coulombic efficiency (%) of the battery = (initial discharging capacity/initial charging capacity) × 100% based on the above discharging capacity and charging capacity; (4) standing for 10 minutes; (5) repeating the above step 1 to step 4 until the capacity attenuated to 80%. The cycle performance was tested and the energy density of the battery after 500 cycles was calculated, and the number of cycles required for the battery capacity to attenuate to 80% of the initial capacity was measured. Results thereof are shown in Table 3.

### Comparative Example 4

In this comparative example, the steps of Comparative Example 1 were repeated to synthesize a lithium-ion battery (CB value is 1.07). A charge-discharge cycle test was performed at 1 C rate at room temperature, the initial coulombic efficiency of the battery and the energy density after 500 cycles were calculated, and the number of cycles required for the battery capacity to attenuate to 80% of the initial capacity was measured. Results thereof are shown in Table 3.

**Table 3. Performance Characterization of Lithium-ion Batteries of Example 4 and Comparative Example 4 Including Different Anode Plates**

| | Lithium-precipitation inhibiting layer | CB value | Initial coulombic efficiency | Number of cycles when capacity attenuates to 80% | Energy density after 500 cycles (Wh/kg) |
|---|---|---|---|---|---|
| Example 4 | Containing LiFePO₄ | 1.07 | 92.4% | 2216 | 235 |
| Comparative Example 4 | None | 1.07 | 88.3% | 726 | 212 |

It can be seen from the experimental results in Table 3 that the battery of Example 4 has higher initial coulombic efficiency and better cycle performance. Since the difference between Example 4 and Comparative Example 4 merely lies in whether a lithium-precipitation inhibiting layer is provided on the surface of the anode, it indicates that the practice of providing the lithium-precipitation inhibiting layer in the present disclosure can significantly improve the above performances.

### Example 5

In this Example 5, the steps of Example 1 were repeated to manufacture a lithium-ion battery. The difference merely lies in that the thickness of the anode active material layer is changed to 20, 30, 55, 100, 260, 340, and 400 microns by adjusting the coating amount of the anode active material layer, and the lithium-precipitation inhibiting layer formed on the anode active material layer has a thickness of 6 microns. In this example, the ratio of the thickness of the lithium-precipitation inhibiting layer to the thickness of the anode active material layer is equal to 0.3, 0.2, 0.11, 0.06, 0.023, 0.018, and 0.015, respectively. Meanwhile, the coating thickness of the cathode active material layer was proportionally changed to maintain the CB value of the battery at 1.07. A charge-discharge cycle test was performed at 1 C rate at room temperature, the initial coulombic efficiency of the battery and the energy density after 500 cycles were calculated, and the number of cycles required for the battery capacity to attenuate to 80% of the initial capacity was measured. Results thereof are shown in Table 4.

### Comparative Example 5

In this Comparative Example 5, the steps of Comparative Example 1 were repeated to manufacture a lithium-ion battery. The difference merely lies in that the thickness of the anode active material layer is changed to 30, 55, 100, 260, and 340 microns by adjusting the coating amount of the anode active material layer. Meanwhile, the coating thickness of the cathode/positive electrode active material layer is proportionally changed to maintain the CB value of the battery at 1.07. A charge-discharge cycle test was performed at 1 C rate at room temperature, the initial coulombic efficiency of the battery and the energy density after 500 cycles were calculated, and the number of cycles required for the battery capacity to attenuate to 80% of the initial capacity was measured. Results thereof are shown in Table 4.

**Table 4: Performance Characterization of Batteries of Example 5 and Comparative Example 5 Having Different Anode Active Material Layer Thicknesses**

| | Lithium-precipitation inhibiting layer | Anode active material layer thickness | Ratio of lithium-precipitation inhibiting layer thickness to anode active material layer thickness | Initial coulombic efficiency | Number of cycles when capacity attenuates to 80% | Energy density after 500 cycles (Wh/kg) |
|---|---|---|---|---|---|---|
| Example 5 | Containing LiFePO₄ | 20 µm | 0.3 | 89.1% | 958 | 186 |
| | | 30 µm | 0.2 | 89.4% | 1203 | 213 |
| | | 55 µm | 0.11 | 90.7% | 1529 | 226 |
| | | 100 µm | 0.06 | 91.4% | 1809 | 238 |
| | | 260 µm | 0.023 | 90.2% | 1437 | 228 |
| | | 340 µm | 0.018 | 89.6% | 1278 | 219 |
| | | 400 µm | 0.015 | 89.2% | 973 | 192 |
| Comparative Example 5 | None | 30 µm | 0 | 87.4% | 556 | 198 |
| | | 55 µm | 0 | 88.1% | 676 | 203 |
| | | 100 µm | 0 | 88.4% | 721 | 209 |
| | | 260 µm | 0 | 88.3% | 688 | 207 |
| | | 340 µm | 0 | 87.9% | 626 | 203 |

From the experimental results shown in Table 4 above, it can be seen that when the anode active material layer thickness of Example 5 is within the range of 30-340 microns and the ratio of the lithium-precipitation inhibiting layer thickness to the anode active material layer thickness is within the range of 0.018 to 0.2, the initial coulombic efficiency and the capacity attenuation property of the battery of Example 5 are significantly superior to corresponding performances of Comparative Example 5. In addition, in Example 5, when the thickness of the anode active material layer is within the range of 55-260 microns, further improvement in cycle performance of the battery can be achieved. Still further, particularly optimized cell cycle performance can be achieved when the thickness of the anode active material layer is 100 microns. In addition, it was found that when the anode active material thickness of the battery in Example 5 is out of the range of 30-340 microns and the ratio of the lithium-precipitation inhibiting layer thickness to the anode active material layer thickness is out of the range of 0.018 to 0.2, the lithium-ion battery manufactured in Example 5 is still significantly superior to Comparative Example 5 in the initial coulombic efficiency and the attenuation resistance of battery capacity (the number of cycles required for the battery capacity to attenuate to 80% of the initial capacity), but cannot achieve the excellent energy density after 500 cycles like the battery having the preferred anode active material layer thickness and the ratio of the lithium-precipitation inhibiting layer to anode active material layer thickness described in the above.

### Example 6

In this Example 6, the steps of Example 1 were repeated to manufacture a lithium-ion battery. The difference merely lies in that the thickness of the anode active material layer is maintained at 100 microns by adjusting the coating amount of the anode active material layer, and the thickness of the formed lithium-precipitation inhibiting layer is adjusted to 30, 20, 11, 6, 2.3, 1.8, and 1.5 microns by controlling the amount of the lithium-precipitation inhibiting layer slurry applied on the anode active material layer (ratios of the thickness of the lithium-precipitation inhibiting layer to the thickness of the anode active material layer are 0.3, 0.2, 0.11, 0.06, 0.023, 0.018 and 0.015, respectively). The coating thickness of the cathode/positive electrode active material layer and the anode active material thickness were proportionally selected to maintain the CB value of the battery at 1.07. A charge-discharge cycle test was performed at 1 C rate at room temperature, the initial coulombic efficiency of the battery and the energy density after 500 cycles were calculated, and the number of cycles required for the battery capacity to attenuate to 80% of the initial capacity was measured. Results thereof are shown in Table 5.

**Table 5: Performance Characterization of the Battery of Example 6 with Different Lithium-precipitation Inhibiting Layer Thicknesses**

| | Lithium-precipitation inhibiting layer | Lithium-precipitation inhibiting layer thickness | Ratio of lithium-precipitation inhibiting layer thickness to anode active material layer thickness | Initial coulombic efficiency | Number of cycles when capacity attenuates to 80% | Energy density after 500 cycles (Wh/kg) |
|---|---|---|---|---|---|---|
| | | 30µm | 0.3 | 88.5% | 962 | 187 |
| | | 20 µm | 0.2 | 88.9% | 1321 | 219 |
| | | 11 µm | 0.11 | 89.7% | 1601 | 225 |
| Example 6 | Containing LiFePO₄ | 6 µm | 0.06 | 91.4% | 1809 | 238 |
| | | 2.3 µm | 0.023 | 91.1% | 1566 | 229 |
| | | 1.8 µm | 0.018 | 92.4% | 1274 | 221 |
| | | 1.5µm | 0.015 | 92.5% | 1076 | 203 |

From the experimental results shown in the above Table 5, it can be seen that the change of the thickness of the lithium-precipitation inhibiting layer in Example 6 also influences the cycle performance of the battery. When the thickness of the lithium-precipitation inhibiting layer is 1.8-20 microns, and the ratio of the thickness of the lithium-precipitation inhibiting layer to the thickness of the anode active material layer is within the range of 0.018 to 0.2, the lithium-ion battery is relatively satisfactory in terms of initial coulombic efficiency and capacity attenuation property. When the thickness of the lithium-precipitation inhibiting layer is 2.3-15 microns, and the ratio of the thickness of the lithium-precipitation inhibiting layer to the thickness of the anode active material layer is within the range of 0.023 to 0.15, further improvement on the battery cycle performance can be achieved. Still further, particularly optimized initial coulombic efficiency and cycle performance can be achieved when the thickness of the lithium-precipitation inhibiting layer is 6 microns. In addition, it also can be seen from the above experimental results that when the lithium-precipitation inhibiting layer thickness of the battery in Example 6 is out of the range of 1.8-20 microns and the ratio of the lithium-precipitation inhibiting layer thickness to the anode active material layer thickness is out of the range of 0.018 to 0.2, the lithium-ion battery still can have relatively excellent results in the initial coulombic efficiency and the attenuation resistance for battery capacity (the number of cycles required for the battery capacity to attenuate to 80% of the initial capacity) (for example, compared with the battery in the comparative example without the lithium-precipitation inhibiting layer thickness shown in the above Table 4), proving that the lithium-precipitation inhibiting layer of this thickness still can exert the lithium-precipitation inhibiting effect to a certain extent, but cannot achieve the excellent energy density after 500 cycles like the battery having the preferred lithium-precipitation inhibiting layer thickness and the ratio of the lithium-precipitation inhibiting layer to anode active material layer thickness described in the above.

### Example 7

In this Example 7, a negative electrode/anode was manufactured according to the following steps: graphite, a binder polyurethane, a thickening agent carboxymethylcellulose sodium (CMC-Na), and a conductive agent carbon fiber were fully stirred and mixed in deionized water at a weight ratio of 96.5:1.35:1.35:0.8, to form them into a uniform slurry with a solid content of 30 wt%; the slurry was coated on a surface of a negative electrode current collector copper foil, the coated negative electrode current collector copper foil was transferred into an oven to be dried at a temperature of 150 °C for 60 minutes, to form a dry coating (i.e., an anode active material layer) having a thickness of 120 microns. It was then removed from the oven. Li₄Ti₅O₁₂, LiFePO₄, LiCoO₂, Li₂Mn₂O₄, LiNi_{0.5}Co_{0.2}Mn_{0.3}O₂, LiNi_{1/3}Co_{1/3}Mn_{1/3}O₂, LiNi_{0.8}Co_{0.1}Mn_{0.1}O₂, and polytetrafluoroethylene as a binder were fully stirred and mixed in deionized water at a weight ratio of 97.1:2.9, to form them into uniform slurry having a solid content of 30 wt%. The slurry was coated on the anode active material layer previously formed. The coated anode active material layer was transferred into the oven to be dried at a temperature of 150 °C for 60 minutes, to form a dry coating (i.e., a lithium-precipitation inhibiting layer) with a thickness of 4 microns. A ratio of the thickness of the lithium-precipitation inhibiting layer used in the present example to the thickness of the anode active material layer is equal to 0.033. Cold pressing was performed using roll press equipment at 60-ton pressure, to obtain an anode plate.

Using the anode plate described above, a lithium-ion battery was manufactured according to the same steps as in Example 1, in which the thickness of the cathode active material in the cathode plate was adjusted to maintain the CB value of all the batteries at 1.07. A charge-discharge cycle test was performed at 1 C rate at room temperature, the initial coulombic efficiency of the battery and the energy density after 500 cycles were calculated, and the number of cycles required for the battery capacity to attenuate to 80% of the initial capacity was measured. Results thereof are shown in Table 6.

### Comparative Example 6

In this Comparative Example 6, the steps of Comparative Example 1 were repeated to manufacture a lithium-ion battery. The difference merely lies in that the thickness of the anode active material layer is changed to 120 microns by adjusting the coating amount of the anode active material layer. Meanwhile, the coating thickness of the cathode/positive electrode active material layer was proportionally changed to maintain the CB value of the battery at 1.07. A charge-discharge cycle test was performed at 1 C rate at room temperature, the initial coulombic efficiency of the battery and the energy density after 500 cycles were calculated, and the number of cycles required for the battery capacity to attenuate to 80% of the initial capacity was measured. Results thereof are shown in Table 6.

### Comparative Example 7

A lithium-ion battery was manufactured in the same manner as in Example 7. The difference merely lies in that a solid raw material used for manufacturing the lithium-precipitation inhibiting layer is a mixture of Li₄Ti₅O₁₂, carbon black, and polytetrafluoroethylene (97.1:1:1.9). The CB value in the battery was maintained at 1.07. A charge-discharge cycle test was performed at 1 C rate at room temperature, the initial coulombic efficiency of the battery and the energy density after 500 cycles were calculated, and the number of cycles required for the battery capacity to attenuate to 80% of the initial capacity was measured. Results thereof are shown in Table 6.

### Comparative Example 8

A lithium-ion battery was manufactured in the same manner as in Example 8. The difference merely lies in that a solid raw material used for manufacturing the lithium-precipitation inhibiting layer is a mixture of LiFePO₄, carbon black, and polytetrafluoroethylene (97.1:1:1.9). The CB value in the battery was maintained at 1.07. A charge-discharge cycle test was performed at 1 C rate at room temperature, the initial coulombic efficiency of the battery and the energy density after 500 cycles were calculated, and the number of cycles required for the battery capacity to attenuate to 80% of the initial capacity was measured. Results thereof are shown in Table 6.

**Table 6: Performance Characterization of Lithium-ion Batteries Having Lithium-precipitation Inhibiting Layer Containing Different Materials**

| | Lithium-precipitation inhibiting layer | Initial coulombic efficiency | Number of cycles when capacity attenuates to 80% | Energy density after 500 cycles (Wh/kg) |
|---|---|---|---|---|
| Example 7 | Li₄Ti₅O₁₂ | 87.2% | 921 | 212 |
| | LiFePO₄ | 92.4% | 1983 | 241 |
| | LiCoO₂ | 92.3% | 1553 | 226 |
| | Li₂Mn₂O₄ | 90.1% | 1409 | 222 |
| | LiNi_{0.5}Co_{0.2}Mn_{0.3}O₂ | 91.8% | 1711 | 231 |
| | LiNi_{1/3}0_{01/3}Mn_{1/3}O₂ | 90.8% | 1801 | 237 |
| | LiNi_{0.8}Co_{0.1}Mn_{0.1}O₂ | 92.0% | 1756 | 248 |
| Comparative Example 6 | None | 88.5% | 732 | 208 |
| Comparative Example 7 | Li₄Ti₅O₁₂+carbon black | 87.1% | 893 | 210 |
| Comparative Example 8 | LiFePO₄+carbon black | 86.7% | 1308 | 218 |

In addition, by comprehensively considering the experimental results shown in the above Table 3 to Table 6, it is found that when the thickness of the lithium-precipitation inhibiting layer is 1.8-20 microns, preferably 2.3-15 microns, more preferably 4-15 microns, the anode active material layer has a thickness of 30-340 microns, preferably 55-260 microns, more preferably 100-150 microns, and the ratio of the thickness of the lithium-precipitation inhibiting layer to the thickness of the anode active material layer is 0.018-0.20, preferably 0.023-0.11, more preferably 0.033-0.10, extremely excellent initial coulombic efficiency and cycle performance can be achieved.

### Example 8

The steps of Example 7 were repeated, and an anode plate and a lithium-ion battery were manufactured by using a plurality of different lithium-precipitation inhibiting layers and lithium-precipitation inhibiting materials. The gas generation performance (air pressure detection performed by connecting a liquid injection hole of a battery core fully charged at 1 C with an air pressure flowmeter) and the safety performance (inserting a stainless steel needle with a diameter of 1 mm into the battery core 2 mm and 5 mm from a large-face aluminum shell at a speed of 0.1 mm/s) were tested at room temperature. Results thereof are shown in Table 7.

### Comparative Example 9

The steps of Comparative Example 6 were repeated to manufacture a lithium-ion battery. The gas generation performance (air pressure detection performed by connecting a liquid injection hole of a battery core fully charged at 1 C with an air pressure flowmeter) and the safety performance (inserting a stainless steel needle with a diameter of 1 mm into the battery core 2 mm and 5 mm from a large-face aluminum shell at a speed of 0.1 mm/s) were tested at room temperature. Results thereof are shown in Table 7.

### Comparative Example 10

The steps of Comparative Example 7 were repeated to manufacture a lithium-ion battery. The gas generation performance (air pressure detection performed by connecting a liquid injection hole of a battery core fully charged at 1 C with an air pressure flowmeter) and the safety performance (inserting a stainless steel needle with a diameter of 1 mm into the battery core 2 mm and 5 mm from a large-face aluminum shell at a speed of 0.1 mm/s) were tested at room temperature. Results thereof are shown in Table 7.

### Comparative Example 11

The steps of Comparative Example 8 were repeated to manufacture a lithium-ion battery. The gas generation performance (air pressure detection performed by connecting a liquid injection hole of a battery core fully charged at 1 C with an air pressure flowmeter) and the safety performance (inserting a stainless steel needle with a diameter of 1 mm into the battery core 2 mm and 5 mm from a large-face aluminum shell at a speed of 0.1 mm/s) were tested at room temperature. Results thereof are shown in Table 7.

**Table 7: Needling Results and Gas Generation Properties of Lithium-ion Batteries**

| | Lithium-precipitation inhibiting layer | 2 mm needling | 5 mm needling | 8 mm needling | Gas generation intensity/Mpa |
|---|---|---|---|---|---|
| Example 8 | Li₄Ti₅O₁₂ | pass | pass | fail | 0.23 |
| | LiFePO₄ | pass | pass | fail | 0.22 |
| | LiCoO₂ | pass | pass | pass | 0.19 |
| | Li₂Mn₂O₄ | pass | pass | fail | 0.17 |
| | LiNi_{0.5}Co_{0.2}Mn_{0.3}O₂ | pass | pass | pass | 0.2 |
| | LiNi_{1/3}Co_{1/3}Mn_{1/3}O₂ | pass | pass | pass | 0.19 |
| | LiNi_{0.8}Co_{0.1}Mn_{0.1}O₂ | pass | pass | pass | 0.21 |
| Comparative Example 9 | None | fail | fail | fail | 0.25 |
| Comparative Example 10 | Li₄Ti₅O₁₂+carbon black | pass | fail | fail | 0.24 |
| Comparative Example 11 | LiFePO₄+carbon black | pass | fail | fail | 0.24 |

The potential differences between the lithium-precipitation inhibiting layer and the anode active material layer selected in all the examples of the present disclosure are within the range of 1-4 volts.

## Claims

1. An anode plate for a lithium-ion battery, the anode plate comprising:
i) a current collector;
ii) an anode active material layer located on at least one surface of the current collector; and
iii) a lithium-precipitation inhibiting layer located on the anode active material layer, wherein the lithium-precipitation inhibiting layer comprises at least one of following lithium-precipitation inhibiting materials: LiNiₓCo_{y}Mn_{z}Fe_{w}O₂, LiMPO₄, and Li₄Ti₅O₁₂, where 0≤x≤1, 0≤y≤1, 0≤z≤1, 0≤w≤1, and x+y+z+w=1, and M is selected from Fe, Co, Ni, Mn and a combination thereof, and a first binder, wherein the lithium-precipitation inhibiting layer contains no conductive material.

2. The anode plate according to claim 1, wherein the lithium-precipitation inhibiting layer contains at least one of the following lithium-precipitation inhibiting materials: LiNi_{0.85}Co_{0.075}Mn_{0.075}O₂, LiNi_{0.8}Co_{0.1}Mn_{0.1}O₂, LiNi_{0.7}Co_{0.15}Mn_{0.15}O₂, LiNi_{0.6}Co_{0.2}Mn_{0.2}O₂, LiNi_{0.5}Co_{0.2}Mn_{0.3}O₂, LiNi_{1/3}Co_{1/3}Mn_{1/3}O₂, LiCoO₂, LiNiO₂, LiMnO₂, LiFeO₂, LiFePO₄, LiCoPO₄, LiNiPO₄, LiMnPO₄, Li₄Ti₅O₁₂.

3. The anode plate according to claim 1, wherein the lithium-precipitation inhibiting layer contains no carbon-based conductive material.

4. The anode plate according to claim 1, wherein the lithium-precipitation inhibiting layer consists of the lithium-precipitation inhibiting material and one or more binders.

5. The anode plate according to claim 1, wherein the lithium-precipitation inhibiting layer has a thickness of 1.8 - 20 µm (1.8-20 microns); the anode active material layer has a thickness of 30 - 340 µm (30-340 microns), and the thickness of the lithium-precipitation inhibiting layer is 0.018-0.2 times that of the anode active material layer.

6. The anode plate according to claim 1, wherein the lithium-precipitation inhibiting layer has a thickness of 2.3 - 15 µm (2.3-15 microns); the anode active material layer has a thickness of 55 - 260 µm (55-260 microns), and the thickness of the lithium-precipitation inhibiting layer is 0.023-0.11 times that of the anode active material layer.

7. The anode plate according to claim 1, wherein a potential difference between the lithium-precipitation inhibiting layer and the anode active material layer is 1-4 volts.

8. A lithium-ion battery, which comprises a cathode plate, an electrolyte, and the anode plate according to any one of claims 1-7.

9. The lithium-ion battery according to claim 8, wherein a capacity ratio of the anode plate and the cathode plate is 1.07 to 1.01.

10. A method of inhibiting lithium precipitation on a surface of an anode plate in a lithium-ion battery, the method comprising:
providing an anode plate, wherein the anode plate comprises a current collector and an anode active material layer located on at least one surface of the current collector; and
providing a lithium-precipitation inhibiting layer on a surface of the anode active material layer, wherein the lithium-precipitation inhibiting layer comprises at least one of following materials: LiNiₓCo_{y}Mn_{z}Fe_{w}O₂, LiMPO₄, Li₂M₂O₄ and Li₄Ti₅O₁₂, where 0≤x≤1, 0≤y≤1, 0≤z≤1, 0≤w≤1, and x+y+z+w=1, and M is selected from Fe, Co, Ni, Mn and a combination thereof, and a first binder, wherein the lithium-precipitation inhibiting layer contains no conductive material.

11. A battery module, comprising the lithium-ion battery according to claim 8 or 9.

12. A battery pack, comprising the battery module according to claim 11.

13. A power consumption device, which comprises at least one of the lithium-ion battery according to claim 8 or 9, the battery module according to claim 11, and the battery pack according to claim 12.

## Patentansprüche

1. Anodenplatte für eine Lithiumionen-Batterie, wobei die Anodenplatte aufweist:
i) einen Stromsammler;
ii) eine Anoden-Aktivmaterialschicht, die sich auf mindestens einer Oberfläche des Stromsammlers befindet; und
iii) eine Lithiumniederschlag-hemmende Schicht, die sich auf der Anoden-Aktivmaterialschicht befindet, wobei die Lithiumniederschlag-hemmende Schicht mindestens eines der folgenden Lithiumniederschlag-hemmenden Materialien aufweist: LiNiₓCo_{y}Mn_{z}Fe_{w}O₂, LiMPO₄ und Li₄Ti₅O₁₂, wobei 0≤x≤1, 0≤y≤1, 0≤z≤1, 0≤w≤1, x+y+z+w=1 und M ausgewählt ist aus Fe, Co, Ni, Mn und einer Kombination davon, und ein erstes Bindemittel, wobei die Lithiumniederschlag-hemmende Schicht kein leitfähiges Material enthält.

2. Anodenplatte nach Anspruch 1, wobei die Lithiumniederschlag-hemmende Schicht mindestens eines der folgenden Lithiumniederschlag-hemmenden Materialien enthält: LiNi_{0,85}Co_{0,075}Mn_{0,075}O₂, LiNi_{0,8}Co_{0,1}Mn_{0,1}O₂, LiNi_{0,7}Co_{0,15}Mn_{0,15}O₂, LiNi_{0,6}Co_{0,2}Mn_{0,2}O₂, LiNi_{0.5}Co_{0,2}Mn_{0,3}O₂, LiNi_{1/3}Co_{1/3}Mn_{1/3}O₂, LiCoO₂, LiNiO₂, LiMnO₂, LiFeO₂, LiFePO₄, LiCoPO₄, LiNiPO₄, LiMnPO₄, Li₄Ti₅O₁₂.

3. Anodenplatte nach Anspruch 1, wobei die Lithiumniederschlag-hemmende Schicht kein kohlenstoffbasiertes leitfähiges Material enthält.

4. Anodenplatte nach Anspruch 1, wobei die Lithiumniederschlag-hemmende Schicht aus dem Lithiumniederschlag-hemmenden Material und einem oder mehreren Bindemitteln besteht.

5. Anodenplatte nach Anspruch 1, wobei die Lithiumniederschlag-hemmende Schicht eine Dicke von 1,8-20 µm (1,8-20 Mikrometer) aufweist, die Anoden-Aktivmaterialschicht eine Dicke von 30-340 µm (30-340 Mikrometer) aufweist und die Dicke der Lithiumniederschlag-hemmenden Schicht 0,018-0,2-mal so groß wie die der Anoden-Aktivmaterialschicht ist.

6. Anodenplatte nach Anspruch 1, wobei die Lithiumniederschlag-hemmende Schicht eine Dicke von 2,3-15 µm (2,3-15 Mikrometer) aufweist, die Anoden-Aktivmaterialschicht eine Dicke von 55-260 µm (55-260 Mikrometer) aufweist und die Dicke der Lithiumniederschlag-hemmenden Schicht 0,023-0,11-mal so groß wie die der Anoden-Aktivmaterialschicht ist.

7. Anodenplatte nach Anspruch 1, wobei ein Potenzialunterschied zwischen der Lithiumniederschlag-hemmenden Schicht und der Anoden-Aktivmaterialschicht 1-4 Volt beträgt.

8. Lithiumionen-Batterie, die eine Kathodenplatte, einen Elektrolyt und die Anodenplatte nach einem der Ansprüche 1-7 aufweist.

9. Lithiumionen-Batterie nach Anspruch 8, wobei ein Kapazitätsverhältnis der Anodenplatte und der Kathodenplatte 1,07 bis 1,01 beträgt.

10. Verfahren zum Hemmen von Lithiumniederschlagbildung auf einer Oberfläche einer Anodenplatte in einer Lithiumionen-Batterie, wobei das Verfahren umfasst:
Bereitstellen einer Anodenplatte, wobei die Anodenplatte einen Stromsammler und eine Anoden-Aktivmaterialschicht aufweist, die sich auf mindestens einer Oberfläche des Stromsammlers befindet; und
Bereitstellen einer Lithiumniederschlag-hemmenden Schicht auf einer Oberfläche der Anoden-Aktivmaterialschicht, wobei die Lithiumniederschlag-hemmende Schicht mindestens eines der folgenden Materialien aufweist: LiNiₓCo_{y}Mn_{z}Fe_{w}O₂, LiMPO₄, Li₂M₂O₄ und Li₄Ti₅O₁₂, wobei 0≤x≤1, 0≤y≤1, 0≤z≤1, 0≤w≤1, x+y+z+w=1 und M ausgewählt ist aus Fe, Co, Ni, Mn und einer Kombination davon, und ein erstes Bindemittel, wobei die Lithiumniederschlag-hemmende Schicht kein leitfähiges Material enthält.

11. Batteriemodul mit der Lithiumionen-Batterie nach Anspruch 8 oder 9.

12. Batteriepack mit dem Batteriemodul nach Anspruch 11.

13. Strom verbrauchende Einrichtung, welche die Lithiumionen-Batterie nach Anspruch 8 oder 9, das Batteriemodul nach Anspruch 11 und/oder den Batteriepack nach Anspruch 12 aufweist.

## Revendications

1. Plaque d'anode pour batterie lithium-ion, la plaque d'anode comprenant:
i) un collecteur de courant;
ii) une couche de matériau actif d'anode située sur au moins une surface du collecteur de courant; et
iii) une couche inhibitrice de précipitation de lithium située sur la couche de matériau actif d'anode, dans laquelle la couche inhibitrice de précipitation de lithium comprend au moins un des matériaux inhibiteurs de précipitation de lithium suivants: LiNiₓCo_{y}Mn_{z}Fe_{w}O₂, LiMPO₄, et Li₄Ti₅O₁₂, dans laquelle 0≤x≤1, 0≤y≤1, 0≤z≤1, 0≤w≤1, et x+y+z+w=1, et M est choisi parmi Fe, Co, Ni, Mn et une combinaison de ceux-ci, et un premier liant, dans laquelle la couche inhibitrice de précipitation de lithium ne contient aucun matériau conducteur.

2. Plaque d'anode selon la revendication 1, dans laquelle la couche inhibitrice de précipitation de lithium contient au moins un des matériaux inhibiteurs de précipitation de lithium suivants : LiNi_{0.85}Co_{0.075}Mn_{0.075}O₂, LiNi_{0.8}Co_{0.1}Mn_{0.1}O₂, LiNi_{0.7}Co_{0.15}Mn_{0.15}O₂, LiNi_{0.6}Co_{0.2}Mn_{0.2}O₂, LiNi_{0.5}Co_{0.2}Mn_{0.3}O₂, LiNi_{1/3}Co_{1/3}Mn_{1/3}O₂, LiCoO₂, LiNiO₂, LiMnO₂, LiFeO₂, LiFePO₄, LiCoPO₄, LiNiPO₄, LiMnPO₄, Li₄Ti₅O₁₂.

3. Plaque d'anode selon la revendication 1, dans laquelle la couche inhibitrice de précipitation du lithium ne contient aucun matériau conducteur à base de carbone.

4. Plaque d'anode selon la revendication 1, dans laquelle la couche inhibitrice de précipitation de lithium est constituée du matériau inhibiteur de précipitation de lithium et d'un ou plusieurs liants.

5. Plaque d'anode selon la revendication 1, dans laquelle la couche inhibitrice de précipitation de lithium présente une épaisseur de 1,8 à 20 µm (1,8 à 20 microns); la couche de matériau actif d'anode présente une épaisseur de 30 à 340 µm (30 à 340 microns), et l'épaisseur de la couche inhibitrice de précipitation de lithium est de 0,018 à 0,2 fois celle de la couche de matériau actif d'anode.

6. Plaque d'anode selon la revendication 1, dans laquelle la couche inhibitrice de précipitation de lithium présente une épaisseur de 2,3 à 15 µm (2,3 à 15 microns); la couche de matériau actif d'anode présente une épaisseur de 55 à 260 µm (55 à 260 microns), et l'épaisseur de la couche inhibitrice de précipitation de lithium est de 0,023 à 0,11 fois celle de la couche de matériau actif d'anode.

7. Plaque d'anode selon la revendication 1, dans laquelle une différence de potentiel entre la couche inhibitrice de précipitation de lithium et la couche de matériau actif d'anode est de 1 à 4 volts.

8. Batterie lithium-ion, qui comprend une plaque de cathode, un électrolyte et la plaque d'anode selon l'une quelconque des revendications 1 à 7.

9. Batterie lithium-ion selon la revendication 8, dans laquelle un rapport de capacité de la plaque d'anode et de la plaque de cathode est de 1,07 à 1,01.

10. Procédé d'inhibition de la précipitation de lithium sur une surface d'une plaque d'anode dans une batterie lithium-ion, le procédé comprenant:
fournir une plaque d'anode, dans lequel la plaque d'anode comprend un collecteur de courant et une couche de matériau actif d'anode située sur au moins une surface du collecteur de courant; et
fournir une couche inhibitrice de précipitation de lithium sur une surface de la couche de matériau actif d'anode, dans lequel la couche inhibitrice de précipitation de lithium comprend au moins un des matériaux suivants: LiNiₓCo_{y}Mn_{z}Fe_{w}O₂, LiMPO₄, Li₂M₂O₄ et Li₄Ti₅O₁₂, dans lequel 0≤x≤1, 0≤y≤1, 0≤z≤1, 0≤w≤1, and x+y+z+w=1, et M est choisi parmi Fe, Co, Ni, Mn et une combinaison de ceux-ci, et un premier liant, dans lequel la couche inhibitrice de précipitation de lithium ne contient aucun matériau conducteur.

11. Module de batterie, comprenant la batterie lithium-ion selon la revendication 8 ou 9.

12. Bloc-batterie, comprenant le module de batterie selon la revendication 11.

13. Dispositif de consommation d'énergie, qui comprend au moins un parmi la batterie lithium-ion selon la revendication 8 ou 9, le module de batterie selon la revendication 11, et le bloc-batterie selon la revendication 12.
